(19) Europäisches Patentamt
European Patent Office
Office européen des brevets

(11) Veröffentlichungsnummer : **0 028 754**
**B1**

(12) # EUROPÄISCHE PATENTSCHRIFT

(45) Veröffentlichungstag der Patentschrift : **07.12.83**

(51) Int. Cl.³ : **C 09 B 62/085**, D 06 P 3/66, D 06 P 3/10

(21) Anmeldenummer : **80106573.1**

(22) Anmeldetag : **25.10.80**

(54) **Faserreaktive Monoazofarbstoffe, deren Herstellung und Verwendung.**

(30) Priorität : **08.11.79 DE 2945058**

(43) Veröffentlichungstag der Anmeldung : **20.05.81 Patentblatt 81/20**

(45) Bekanntmachung des Hinweises auf die Patenterteilung : **07.12.83 Patentblatt 83/49**

(84) Benannte Vertragsstaaten : **CH DE FR GB IT LI**

(56) Entgegenhaltungen :
**FR-A- 1 265 526**
**FR-A- 2 335 570**
**FR-A- 2 441 645**
**US-A- 3 438 962**
**Die Akte enthält technische Angaben, die nach dem Eingang der Anmeldung eingereicht wurden und die nicht in dieser Patentschrift enthalten sind.**

(73) Patentinhaber : **BAYER AG**
**Zentralbereich Patente, Marken und Lizenzen**
**D-5090 Leverkusen 1, Bayerwerk (DE)**

(72) Erfinder : **Henk, Hermann, Dr.**
**Roggendorfstrasse 55**
**D-5000 Köln 80 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 028 754 B1

Faserreaktive Monoazofarbstoffe, deren Herstellung und Verwendung

Die Erfindung betrifft faserreaktive Monoazofarbstoffe der allgemeinen Formel (1)

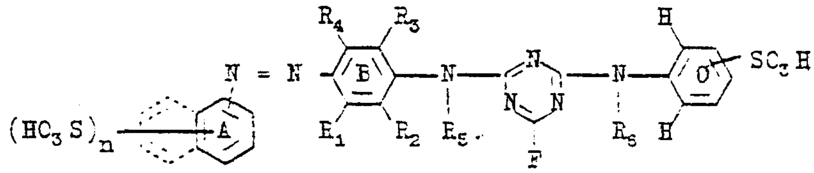

(1)

worin

$R_1$-$R_4$ unabhängig voneinander Wasserstoff, eine niedermolekulare Alkyl- oder Alkoxygruppe,

$R_5$ und $R_6$ unabhängig voneinander Wasserstoff oder eine ggf. subst. niedermolekulare Alkylgruppe bedeuten,

n 1, 2 oder 3 ist und die Benzol- bzw. Naphthalinringe A und C außer den Sulfonsäuregruppen weitere Substituenten tragen können.

Ist A ein Phenylrest, so kann er eine oder zwei Sulfonsäuregruppen tragen und beispielsweise durch $C_1$-$C_4$-Alkyl-, $C_1$-$C_4$-Alkoxy-, Halogen- insbesondere Chlor-, Hydroxy-, $C_1$-$C_4$-Alkylcarbonylamino- oder Benzoylamino-Gruppen und/oder Carboxy substituiert sein.

Bevorzugt sind Farbstoffe der allgemeinen Formel (1) mit A gleich Sulfophenyl — insbesondere 3 — oder 4-Sulfophenyl.

Ist A ein Naphthalinrest, so kann er die Azobrücke in 1- oder 2-Stellung tragen und durch eine bis drei Sulfonsäuregruppen substituiert sein.

Bevorzugt sind Farbstoffe der allgemeinen Formel (1) mit A gleich Disulfonaphthyl-(2).

Bevorzugt sind Farbstoffe der allgemeinen Formel (1) bei denen B ein 1,4-verknüpfter Phenylenrest ist, in dem 1 oder 2 der Reste $R_1$-$R_4$ für einen $C_1$-$C_4$-Alkyl- und/oder Alkoxyrest, insbesondere Methyl- und/oder Methoxy stehen und die restlichen für Wasserstoff insbesondere Farbstoffe, bei denen B folgende Bedeutung hat :

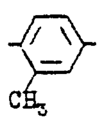, 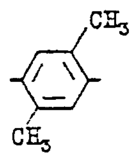, 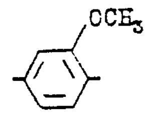, 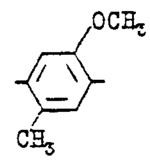 und 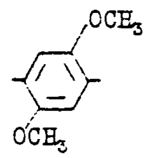

Schließlich sind ganz generell Farbstoffe bevorzugt, bei denen $R_5$ und $R_6$ gleich Wasserstoff ist und Farbstoffe, bei denen C ein 3- oder 4-Sulfophenylrest ist, der ggf. durch Carboxy, Hydroxy, $C_1$-$C_4$-Alkyl-, $C_1$-$C_4$-Alkoxy, $C_1$-$C_4$-Alkyl- oder Arylamino, Halogen, insbesondere Chlor-, $C_1$-$C_4$-Alkylcarbonylamino-, Benzoylamino- oder Oxalylamino-Gruppen substituiert sein kann.

Aus dem Stand der Technik sind ähnlich strukturierte Reaktivfarbstoffe bekannt. Siehe dazu US-A-3 438 962 mit zwingend vorhandener Trisulfonaphthylgruppe und Chlortriazinylgruppe. Vergleiche weiterhin FR-A-2 335 570, wo Fluortriazinyl-Reaktivfarbstoffe mit Phenylamino-Substituenten am heterocyclischen System beschrieben werden.

Die erfindungsgemäßen Farbstoffe zeigen aber gegenüber den vorerwähnten Farbstoffen des Standes der Technik überraschende färberische Vorteile.

Die Herstellung der erfindungsgemäßen faserreaktiven Farbstoffe erfolgt durch Umsetzung eines aminogruppenhaltigen Monoazofarbstoffs der allgemeinen Formel (2)

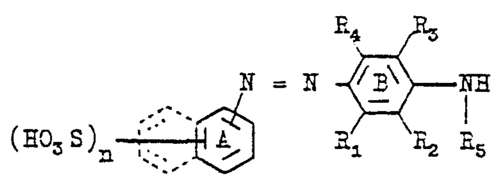

(2)

worin $R_1$-$R_5$, A, B und n die oben genannte Bedeutung haben und einer — ggf. subst. — 3- oder 4-Aminobenzolsulfonsäure (3)

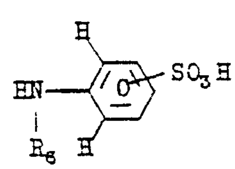

(3)

worin $R_6$ und C die oben genannte Bedeutung haben mit 2,4,6-Trifluor-1,3,5-triazin in beliebiger Reihenfolge.

Geeignete aminogruppenhaltige Monoazofarbstoffe (2) sind in der Literatur in großer Zahl beschrieben.

Als geeignete Aminobenzolsulfonsäure (3) seien genannt :

3-Aminobenzolsulfonsäure
4-Aminobenzolsulfonsäure
5-Amino-2-chlorbenzolsulfonsäure
5-Amino-2-(phenylamino)-benzolsulfonsäure
5-Amino-2-oxalylamino-benzolsulfonsäure
5-Amino-2-methyl-benzolsulfonsäure
4-Amino-2-methyl-benzolsulfonsäure.

Die Herstellung der erfindungsgemäßen Farbstoffe und Farbstoffzwischenprodukte erfolgt vorzugsweise in wässriger Lösung. Die Umsetzungen mit 2,4,6-Trifluor-1,3,5-triazin erfolgen bei schwach saurem bis schwach alkalischem pH-Wert und bei niedriger Temperatur. Die bei der Kondensation freiwerdende Fluorwasserstoffsäure wird durch Zugabe von verdünnter Alkalihydroxid- bzw. -carbonat- oder -bicarbonat-Lösung neutralisiert.

Die erfindungsgemäßen Monofluor-triazin Farbstoffe eignen sich zum Färben und Bedrucken verschiedener Materialien wie z. B. Wolle, Polyamid und Leder, insbesondere aber cellulosehaltiger Materialien wie Leinen, Zellwolle, regenerierte Cellulose, vor allem aber Baumwolle.

Die angegebenen Formeln sind die der freien Säuren. Die Farbstoffe werden im allgemeinen in Form ihrer Salze eingesetzt. Geeignete Salze sind insbesondere die Alkalisalze (Li-, Na-, K-) oder die Ammoniumsalze.

Beispiel 1

27,5 Teile 3-Aminobenzolsulfonsäure werden in 300 Teilen Wasser neutral gelöst. Bei 0 °C werden unter kräftigem Rühren 13,5 Vol.-Teile 2,4,6-Trifluor-1,3,5-triazin rasch zugegeben. Durch gleichzeitige Zugabe von wässriger Sodalösung wird ein pH-Wert von 3-4,5 gehalten. Die Umsetzung ist schnell beendet und das Kondensationsprodukt suspendiert. Zu dieser Suspension gießt man langsam eine neutrale Lösung von 45 Teilen des durch Kuppeln von diazotierter 3-Aminobenzolsulfonsäure mit o-Anisidin-N-methansäure und anschließender Verseifung hergestellten Aminoazofarbstoffes in ca. 750 Teilen Wasser. Die Temperatur steigt auf 10-20 °C. Mit wässriger Sodalösung wird ein pH-Wert von 6-7 gehalten. Nach beendeter Umsetzung, die sich chromatographisch verfolgen läßt, wird der Farbstoff durch Zugabe von Salz isoliert. Nach Trocknen und Mahlen erhält man ein gelbes Farbstoffpulver, das Baumwolle aus wässriger Flotte in echten grünstichig gelben Tönen anfärbt. Der Farbstoff entspricht in Form der freien Säure der Formel

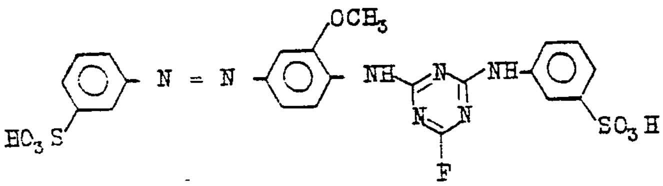

Beispiel 2

Ersetzt man in Beispiel 1 die 3-Aminobenzolsulfonsäure am Fluortriazin durch äquimolare Mengen 4-Aminobenzolsulfonsäure oder durch eine Mischung von beiden, so erhält man gleichsfalls echte grünstichig gelbe Reaktivfarbstoffe.

Ersetzt man den Aminoazofarbstoff aus Beispiel 1 und 2 durch äquivalente Mengen der in nachfolgender Tabelle genannten Aminoazofarbstoffe (Formel 2) und verfährt nach den Angaben aus Beispiel 1 und 2, so erhält man weitere wertvolle Farbstoffe, die Baumwolle in den angegebenen Nuancen färben.

Siehe Tabelle, Seite 4 f.

| Bsp. | Aminoazofarbstoff (2) | Nuance auf Baumwolle |
|---|---|---|
| 3 | 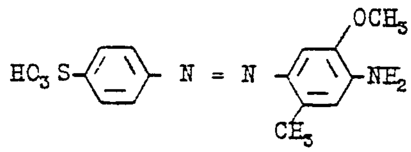 | gelb |
| 4 | 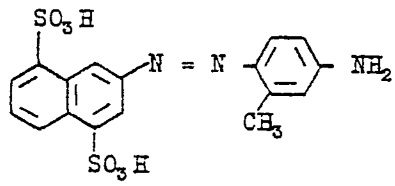 | gelb |
| 5 | 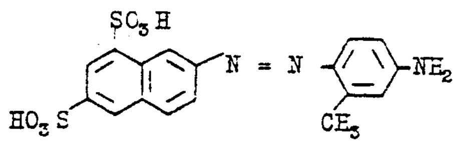 | gelb |
| 6 | 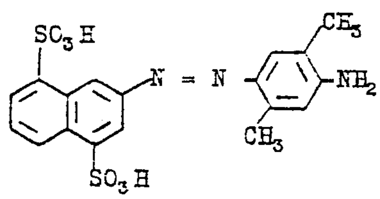 | gelb |
| 7 | 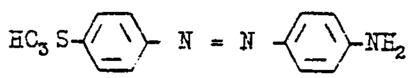 | grünstichig gelb |
| 8 | 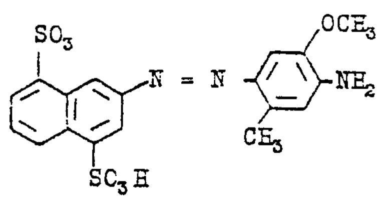 | rotstichig gelb |
| 9 | 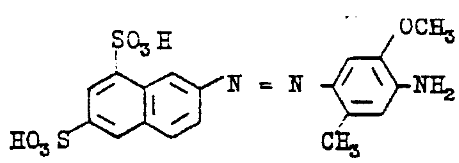 | rotstichiges gelb |
| 10 | 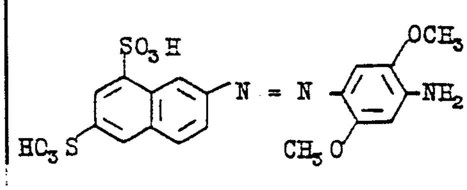 | rotstichig gelb |

**Ansprüche**

1. Faserreaktive Monoazofarbstoffe der Formel

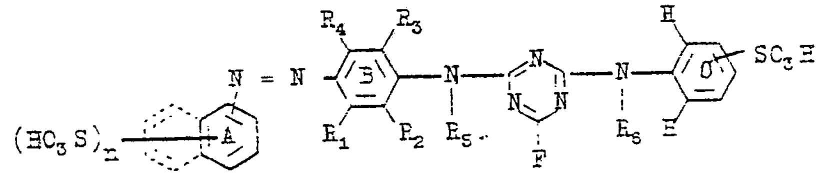

worin

$R_1$ bis $R_4$ unabhängig voneinander Wasserstoff, eine niedermolekulare Alkyl- oder Alkoxygruppe,

$R_5$ und $R_6$ unabhängig voneinander Wasserstoff oder eine ggf. subst. niedermolekulare Alkylgruppe bedeutet,

n 1, 2 oder 3 ist und die Benzol- bzw. Naphthalinringe A und C außer den Sulfonsäuregruppen weitere Substituenten tragen können.

2. Farbstoffe gemäß Anspruch 1, worin A ein Phenylrest ist, der eine oder zwei Sulfonsäuregruppen enthält und der ferner durch $C_1$-$C_4$-Alkyl-, $C_1$-$C_4$-Alkoxy, Halogen, insbesondere Chlor- $C_1$-$C_4$-Alkylcarbonylamino- oder Benzoylaminogruppen und/oder Carboxy substituiert sein kann.

3. Farbstoffe gemäß Ansprüchen 1 und 2, worin A = Sulfophenyl, insbesondere 3- oder 4-Sulfophenyl.

4. Farbstoffe gemäß Anspruch 1, worin A ein 1- oder 2-Naphthylrest ist, der 1 bis 3 Sulfonsäuregruppen enthält.

5. Farbstoffe gemäß Ansprüchen 1 und 4, worin A ein Disulfonaphthyl (2) — rest ist.

6. Farbstoffe gemäß Anspruch 1-5, worin B ein 1,4 verknüpfter Phenylenrest ist, in dem 1 oder 2 der Reste $R_1$-$R_4$ für einen $C_1$-$C_4$-Alkyl- und/oder Alkoxyrest, insbesondere Methyl- und/oder Methoxy stehen und die restlichen für Wasserstoff.

7. Farbstoffe gemäß Anspruch 1-5 worin B folgende Bedeutung hat

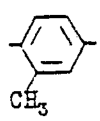 , 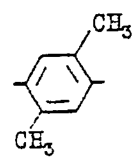 , 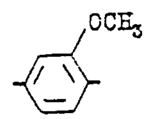 , 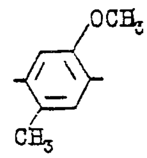 und 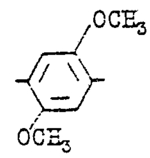

8. Farbstoffe gemäß Ansprüchen 1-7 mit $R_5$ und $R_6$ gleich Wasserstoff.

9. Farbstoffe gemäß Ansprüchen 1-8, worin C ein 3- oder 4-Sulfophenylrest ist, der ferner ggf. durch Carboxy, Hydroxy, $C_1$-$C_4$-Alkyl, $C_1$-$C_4$-Alkoxy, $C_1$-$C_4$-Alkyl- oder Arylamino, Halogen, insbesondere Chlor-, $C_1$-$C_4$-Alkylcarbonylamino-, Benzoylamino- oder Oxalylamino-Gruppen substituiert sein kann.

10. Verfahren zur Herstellung von faserreaktiven Monoazofarbstoffen des Anspruchs 1, dadurch gekennzeichnet, daß man 2,4,6-Trifluor-1,3,5-triazin mit einem aminogruppenhaltigen Monoazofarbstoff und mit einer ggf. substituierten 3- und/oder 4-Aminobenzolsulfonsäure in beliebiger Reihenfolge umsetzt.

11. Verwendung der Farbstoffe der Ansprüche 1-9 zum Färben und Bedrucken von hydroxylgruppen- und amidgruppenhaltigen Materialien insbesondere Textilmaterialien.

**Claims**

1. Fibre-reactive monoazo dyestuffs of the formula

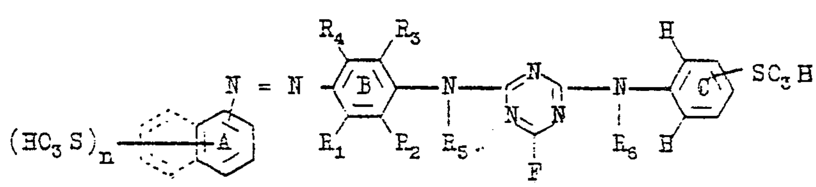

wherein

$R_1$ to $R_4$ independently of one another denote hydrogen or a low-molecular alkyl or alkoxy group,

$R_5$ and $R_6$ independently of one another denote hydrogen or an optionally substituted low-molecular alkyl group and

n is 1, 2 or 3, and the benzene and naphthalene rings A and C can carry other substituents in addition to the sulphonic acid groups.

2. Dyestuffs according to Claim 1, wherein A is a phenyl radical which contains one or two sulphonic acid groups and which can also be substituted by $C_1$-$C_4$-alkyl, $C_1$-$C_4$-alkoxy, halogen, in particular chlorine, $C_1$-$C_4$-alkylcarbonylamino or benzoylamino groups and/or carboxyl.

3. Dyestuffs according to Claims 1 and 2, wherein A = sulphophenyl, in particular 3- or 4-sulphophenyl.

4. Dyestuffs according to Claim 1, wherein A is a 1- or 2-naphthyl radical which contains 1 to 3 sulphonic acid groups.

5. Dyestuffs according to Claims 1 and 4, wherein A is a disulphonaphth-2-yl radical.

6. Dyestuffs according to Claim 1-5, wherein B is a phenylene radical which is linked in the 1-4-position, and in which 1 or 2 of the radicals $R_1$-$R_4$ represent a $C_1$-$C_4$-alkyl and/or -alkoxy radical, in particular methyl and/or methoxy, and the remainder of these radicals represent hydrogen.

7. Dyestuffs according to Claim 1-5, wherein B denotes the following

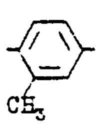 , 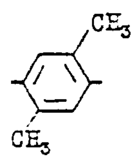 , 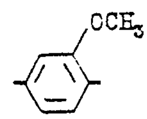 , 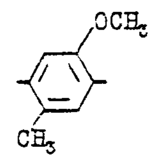 and 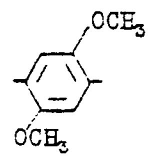

8. Dyestuffs according to Claims 1-7, wherein $R_5$ and $R_6$ are hydrogen.

9. Dyestuffs according to Claims 1-8, wherein C is a 3- or 4-sulphophenyl radical which can also be optionally substituted by carboxyl, hydroxyl, $C_1$-$C_4$-alkyl, $C_1$-$C_4$-alkoxy, $C_1$-$C_4$-alkyl- or aryl-amino, halogen, in particular chlorine, $C_1$-$C_4$-alkylcarbonylamino, benzoylamino or oxalylamino groups.

10. Process for the preparation of fibre-reactive monoazo dyestuffs of Claim 1, characterised in that 2,4,6-trifluoro-1,3,5-triazine is reacted with a monoazo dyestuff containing amino groups and with an optionally substituted 3- and/or 4-aminobenzenesulphonic acid in any desired sequence.

11. Use of the dyestuffs of Claims 1-9 for dyeing and printing materials, in particular textile materials, containing hydroxyl groups or amide groups.

**Revendications**

1. Colorants monoazoïques réactifs à l'égard des fibres, de formule

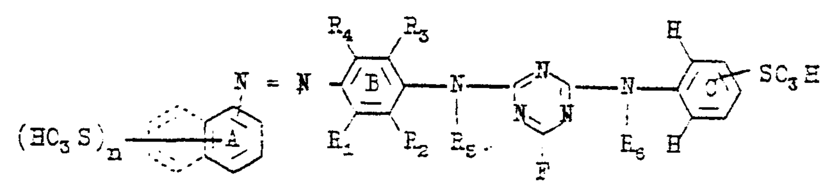

dans laquelle

$R_1$ à $R_4$ représentent, indépendamment les uns des autres, l'hydrogène, un groupe alkyle ou alcoxy inférieur,

$R_5$ et $R_6$ représentent, indépendamment l'un de l'autre, l'hydrogène ou un groupe alkyle inférieur éventuellement substitué,

n est égal à 1, 2 ou 3 et les noyaux benzéniques ou naphtaléniques A et C peuvent porter, en plus des groupes acide sulfonique, d'autres substituants.

2. Colorants selon la revendication 1, dans lesquels A représente un reste phényle qui contient 1 ou 2 groupes acide sulfonique et qui peut en outre être substitué par des groupes alkyle en $C_1$-$C_4$, alcoxy en $C_1$-$C_4$, des halogènes, en particulier le chlore, des groupes (alkyle en $C_1$-$C_4$)-carbonylamino ou benzoylamino et/ou carboxy.

3. Colorants selon les revendications 1 et 2, dans lesquels A = sulfophényle, en particulier 3- ou 4-sulfophényle.

4. Colorants selon la revendication 1, dans lesquels A est un reste 1- ou 2-naphtyle qui contient 1 ou 3 groupes acide sulfonique.

5. Colorants selon les revendications 1 et 4, dans lesquels A est un reste disulfonaphtyle-2.

6. Colorants selon les revendications 1 à 5, dans lesquels B est un reste phénylène relié par les positions 1,4, dans lequel 1 ou 2 des symboles $R_1$ à $R_4$ représentent un groupe alkyle et/ou alcoxy en $C_1$-$C_4$, en particulier méthyle et/ou méthoxy, et les autres l'hydrogène.

7. Colorants selon les revendications 1 à 5, dans lesquels B a la signification suivante

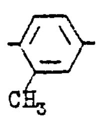, 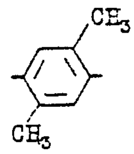, 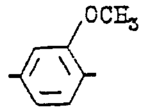, 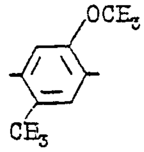 et 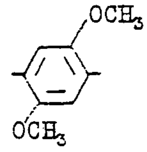

8. Colorants selon les revendications 1 à 7, dans lesquels $R_5$ et $R_6$ représentent l'hydrogène.

9. Colorants selon les revendications 1 à 8, dans lesquels C est un reste 3- ou 4-sulfophényle qui peut en outre être éventuellement substitué par des groupes carboxy, hydroxy, alkyle en $C_1$-$C_4$, alcoxy en $C_1$-$C_4$, (alkyle en $C_1$-$C_4$)- ou arylamino, des halogènes, en particulier le chlore, des groupes (alkyle en $C_1$-$C_4$)-carbonylamino, benzoylamino ou oxalylamino.

10. Procédé de préparation des colorants monoazoïques réactifs à l'égard des fibres selon la revendication 1, caractérisé en ce que l'on fait réagir dans un ordre quelconque la 2,4,6-trifluoro-1,3,5-triazine avec un colorant monoazoïque portant des groupes amino et avec un acide 3- et/ou 4-aminobenzène-sulfonique éventuellement substitué.

11. Utilisation des colorants des revendications 1 à 9 pour la teinture et l'impression de matières contenant des groupes hydroxy et des groupes amide, en particulier des matières textiles.